# EUROPÄISCHE PATENTSCHRIFT

(11) **EP 1 851 459 B1**
(45) Veröffentlichungstag und Bekanntmachung des Hinweises auf die Patenterteilung: **26.11.2008**
(21) Anmeldenummer: 06722520.1
(22) Anmeldetag: 21.02.2006
(51) Int. Cl.: F16D 3/40, F16D 3/38

(54) **KREUZGELENK**
UNIVERSAL JOINT
JOINT DE CARDAN

(30) Priorität: 22.02.2005 DE 102005009286
(43) Veröffentlichungstag der Anmeldung: 07.11.2007
(73) Patentinhaber: Faude, Dieter, 71116 Gärtringen (DE)
(72) Erfinder: Faude, Dieter, 71116 Gärtringen (DE)
(74) Vertreter: Müller, Thomas
(86) Internationale Anmeldenummer: PCT/DE2006/000336
(87) Internationale Veröffentlichungsnummer: WO 2006/089533

(56) Entgegenhaltungen:
- EP-A- 1 122 452
- EP-A- 1 457 696
- DE-A1- 10 326 978
- DE-U1- 29 813 550
- GB-A- 925 322
- US-A1- 2001 049 308
- US-A1- 2003 045 364
- US-B1- 6 846 242

## Beschreibung

### Stand der Technik

Die Erfindung geht aus von einem Kreuzgelenk, nach der Gattung des Hauptanspruchs.

Derartige Kreuzgelenke weisen in der Regel ein Wälz- oder Gleitlager auf. Nachteilig ist allerdings, dass fertigungsbedingte Toleranzen zu Verspannungen führen können oder, dass es zu einem zu großen Spiel kommt, was sich beides negativ auf die Betriebssicherheit des Lagers und auf die Präzision des Kreuzgelenkes bzgl. seiner Positionierung auswirkt.

Aus der Offenlegungsschrift DE 44 39 998 A1 ist ein Kreuzgelenk bekannt, das zur Verbindung zweier Gelenkgabeln eine Zapfenkreuzgarnitur aus vier Zapfen aufweist, wobei sich jeweils zwei Zapfen auf einer gemeinsamen Achse befinden. Jeder Zapfen ist mittels eines Wälzlagers auf einer Lagerbuchse gelagert und weist ein Federelement aus einem hochfesten Kunststoff auf. Durch das Federelement soll eine durch die Montage bedingte Toleranz ausgeglichen werden. Allerdings ermöglicht das Federelement auch ein elastisches Ausweichen des Zapfens in der Lagerbuchse, so dass das Kreuzgelenk nicht präzise positionierbar ist.

Dokumente US 6846242, GB 925 322, EP 1457 696, EP 1122452 und US2001/049308 offenbaren auch Kreuzgelenke.

Die Erfindung und ihre .Vorteile

Das erfindungsgemäße Kreuzgelenk, mit dem kennzeichnenden Merkmal des Anspruchs 1, hat demgegenüber den Vorteil, dass eine Lagervorspanneinheit eine spielfreie Funktion der Gelenkgabel um deren Gelenkachse ermöglicht, wodurch das erfindungsgemäße Kreuzgelenk präzise positionierbar ist. Zusätzlich ist durch den Einsatz neu entwickelter Werkstoffe eine Reduktion des Stip-Slick-Effekts möglich.

Das erfindungsgemäße Kreuzgelenk ist insbesondere einsetzbar bei Robotern, die mit einer Stabkinematik ausgerüstet sind und, die eine Plattform (Stuartplattform) aufweisen und, die dazu dienen, ein an der Plattform mittels eines Gegenstandshalters angeordneten Werkzeuges, oder einen sonstigen Gegenstand, entsprechend einem vorgegebenen Programm dreidimensional zu bewegen. Derartige Automaten finden ihren Einsatz nicht nur in unzugänglichen oder gefährlichen Räumen, sondern vor allem auch als Ersatz für menschliche manuelle Tätigkeit. Dabei ist der Einsatz eines Gleitlagers vorteilhaft, da Wälzlager, die im allgemeinen für solche Arten von Technik gebraucht werden eine viel geringere Tragfähigkeit im Gegensatz zu Gleitlagern, die eine große tragende Fläche bieten, haben.

Nach der Erfindung wird die Lagervorspanneinheit mindestens durch ein auf die Gelenkachse wirkendes Federelement gebildet.

Nach der Erfindung wird mindestens eine der Bohrungen durch eine auf das Federelement wirkende Druckplatte verschlossen. Durch die Druckplatte ist das erfindungsgemäße Kreuzgelenk nachstellbar.

Daher wird US 6846242 als nächstliegenden Stand der Technik betrachtet. Nach einer diesbezüglichen vorteilhaften Ausgestaltung der Erfindung ist zwischen der Druckplatte und dem Basisteil ein Distanzring angeordnet. Durch den Distanzring ist das erfindungsgemäße Kreuzgelenk nachstellbar.

Nach einer zusätzlichen vorteilhaften Ausgestaltung der Erfindung ist das Federelement eine Ringfeder.

Nach einer zusätzlichen vorteilhaften Ausgestaltung der Erfindung ist zwischen den Bohrungen für die Positionierung der Gelenkachsen ein Positionierblock angeordnet.

Nach einer diesbezüglichen vorteilhaften Ausgestaltung der Erfindung sind die Gelenkachsen durch ein Gleitlager in dem Positionierblock gelagert.

Nach Dokument DE 10326978 offenbart ein Kreuzgelenk, dessen Gelenkachsen durch einen Bolzen und zwei Hülsen gebildet werden der Erfindung werden die Gelenkachsen durch einen Bolzen der eine Querbohrung aufweist, und zwei senkrecht zu diesem angeordneten Hülsen oder Bolzen und Hülsen gebildet.

Nach einer diesbezüglichen vorteilhaften Ausgestaltung der Erfindung sind die Gelenkachsen aneinander fixiert.

Nach einer diesbezüglichen vorteilhaften Ausgestaltung der Erfindung erfolgt die Fixierung durch eine Schraube, die durch die Hülsen und eine Bohrung im Bolzen steckbar ist. Dadurch entsteht ein Kreuzbolzen.

Nach einer zusätzlichen vorteilhaften Ausgestaltung der Erfindung weist das Basisteil auf der den Gabelelementen abgewandten Seite mindestens ein Befestigungsmittel auf.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung ist in der Zeichnung dargestellt und im Folgenden näher beschrieben.
Es zeigen:
- Fig.: 1 eine Explosionszeichnung eines erfindungsgemäßen Kreuzgelenkes;
- Fig. 2: eine Aufsicht eines erfindungsgemäßen Kreuzgelenkes;
- Fig. 3: eine Seitenansicht eines erfindungsgemäßen Kreuzgelenkes;
- Fig. 4: eine Seitenansicht eines erfindungsgemäßen Kreuzgelenkes;
- Fig. 5: eine Ansicht eines erfindungsgemäßen Kreuzgelenkes gemäß dem Schnitt A-A aus Fig. 3;
- Fig. 6: eine Ansicht eines erfindungsgemäßen Kreuzgelenkes gemäß dem Schnitt B-B aus Fig. 3;
- Fig. 7: eine perspektivische Detailansicht eines Kreuzbolzens und eine Ansicht des Kreuzbolzens gemäß dem Schnitt A-A aus Fig. 3.;
- Fig. 8: eine perspektivische Detailansicht eines Kreuzbolzens und eine Ansicht des Kreuzbolzens gemäß dem Schnitt A-A aus Fig. 3 in einer abgeänderten Form;
- Fig. 9: eine perspektivische Detailansicht eines Kreuzbolzens und eine Ansicht des Kreuzbolzens gemäß dem Schnitt A-A aus Fig. 3 in einer weiteren abgeänderten Form;
- Fig. 10: eine perspektivische Ansicht eines Positionierblocks und Schnittzeichnungen des Positionierblocks;
- Fig. 11: eine perspektivische Ansicht und eine Aufsicht einer Gelenkgabel mit eingebauten Positionierblock;
- Fig. 12: eine Ansicht eines erfindungsgemäßen Kreuzgelenkes gemäß dem Schnitt B-B aus Fig. 3 und eine Detailansicht einer ersten Variante der Einbausituation des Positionier-blocks;
- Fig. 13: eine Ansicht eines erfindungsgemäßen Kreuzgelenkes gemäß dem Schnitt B-B aus Fig. 3 und eine Detailansicht einer zweiten Variante der Einbausituation des Positionierblocks;
- Fig. 14: eine Ansicht eines erfindungsgemäßen Kreuzgelenkes gemäß dem Schnitt B-B aus Fig. 3 und eine Detailansicht einer dritten Variante der Einbausituation des Positionierblocks;
- Fig. 15: eine Ansicht eines erfindungsgemäßen Kreuzgelenkes gemäß dem Schnitt B-B aus Fig. 3 und eine Detailansicht einer Radiallagerung der Bolzen in den Gelenkaugen;
- Fig. 16: eine Ausführungsvariante des Lagerrings (Ringfeder 15) in Schnittzeichnungen und
- Fig. 17: eine Ansicht eines erfindungsgemäßen Kreuzgelenkes 1 gemäß dem Schnitt B-B aus Fig. 3 und eine Detailansicht einer abgewandelten Radiallagerung.

### Beschreibung des Ausführungsbeispiels

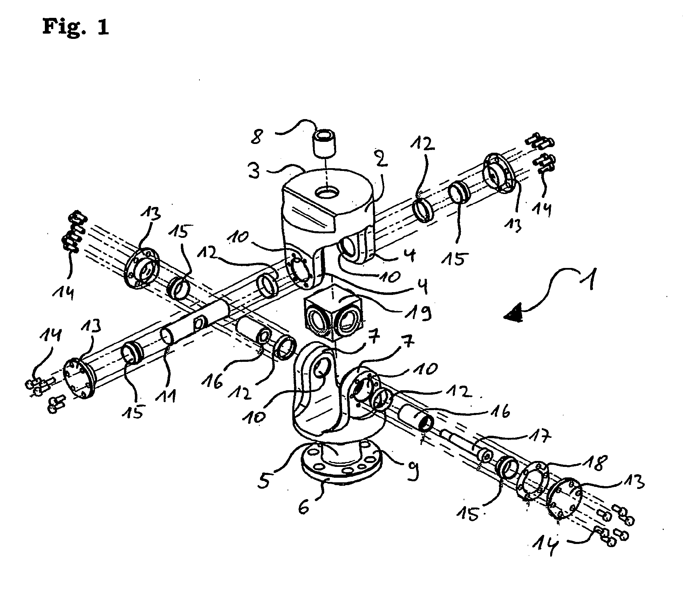

Fig. 1 zeigt eine Explosionszeichnung eines erfindungsgemäßen Kreuzgelenkes 1. Dieses besteht aus einer ersten Gelenkgabel 2, die sich aus einem Basisteil 3 und zwei Gabelelementen 4 zusammensetzt, und einer zweiten Gelenkgabel 5, die sich aus einem Basisteil 6 und zwei Gabelelementen 7 zusammensetzt. Das Basisteil 3 weist einen Gewindeeinsatz 8 auf und dient beispielsweise als Anschlussteil für eine nicht dargestellte Stuartplatte. Es kann eine hart coatierte Oberfläche (Gleitlagergegenläufer) und geschliffene Innenseiten aufweisen und ist ein Lagerelement der Gesamtlagerung. Das Basisteil 6 weist einen Flansch 9 auf und dient beispielsweise als Schnittstelle an unterschiedliche Materialien z.B. einem nicht dargestellten Carbonrohr. Durch die Basisteile 3 und 6 ergibt sich die Möglichkeit im Falle eines Verschleißes oder der Zerstörung des erfindungsgemäßen Kreuzgelenkes 1 dieses leicht auszutauschen. Die Gabelelemente 4 und 7 weisen in der jeweiligen Gelenkachse liegende Bohrungen 10 auf. Die Gelenkachse der ersten Gelenkgabel 2 wird durch einen Bolzen 11 gebildet, der in den Bohrungen 10 der ersten Gelenkgabel 2 durch Lagerringe 12 (Gleitlager) gelagert ist. Diese Lagerringe 12 haben eine zweiseitig konisch angeschliffene Außengeometrie (Außenring). Der Innendurchmesser wird durch eine Konuswirkung verringert bzw. vorgespannt.

Die Bohrungen 10 werden durch jeweils eine Druckplatte 13 verschlossen und mit dem Gabelelement 4 mittels Schrauben 14 (Zylinderschrauben Torx, Imbusschrauben, odgl.) verbunden, wobei die Druckplatten 13 über Ringfedern 15 Druck auf den Bolzen 11 ausüben. Die Druckplatten 13 haben die Aufgabe die Lagervorspannung auf die Lagerringe 12 zu übertragen. Gleichzeitig beinhalten die Druckplatten 13 eine Verdrehsicherung für das Gleitlager. Der Außenring der Ringfeder 15 bildet mit der Druckplatte 13 die Lagervorspanneinheit sowie das Lagergehäuse.

Senkrecht zu dem Bolzen 11 sind zwei Hülsen 16 angeordnet, die mittels einer Schraube 17, beispielsweise einer Passschraube, die an ihrem Kopf nachbearbeitet ist, mit dem Bolzen 11 verschraubt sind und die Gelenkachse der zweiten Gelenkgabel 5 bilden. Die Gelenkachse der zweiten Gelenkgabel 5 ist ebenfalls durch Lagerringe 12 (Gleitlager) gelagert. Die Bohrungen 10 werden durch jeweils eine Druckplatte 13 verschlossen und mit dem Gabelelement 7 mittels Schrauben (Zylinderschrauben Torx, Imbusschrauben, odgl.) verbunden, wobei die Druckplatten 13 über Ringfedern 15 Druck auf die Hülsen 16 ausüben. Zur zusätzlichen Lagervorspannung durch Einlegen bzw. Entnehmen können zwischen den Druckplatten 13 und den Gabelelementen 4 und 7 Distanzringe 18 vorgesehen sein.

Durch die Verschraubung der Hülsen 16 mit dem Bolzen 11 wird ein Kreuzbolzen gebildet, der eine sehr kompakte Bauweise aufweist. Dabei ist der Kreuzbolzen leicht zu montieren bzw. auch zerstörungsfrei zu demontieren.

Mittig zwischen den Gabelelementen 4 und 7 ist im Kreuzungspunkt der Gelenkachsen ein Positionierblock 19 angeordnet, der aus dem selben Werkstoff wie die Lagerringe 12 gefertigt ist. Der Positionierblock 19 hat die Aufgabe den Schnittpunkt der Kreuzgelenkachsen durch eine hochgenaue Fertigung zu bilden und die Kräfte in radialer und axialer Richtung zu übertragen sowie die Achsen zueinander zu positionieren.

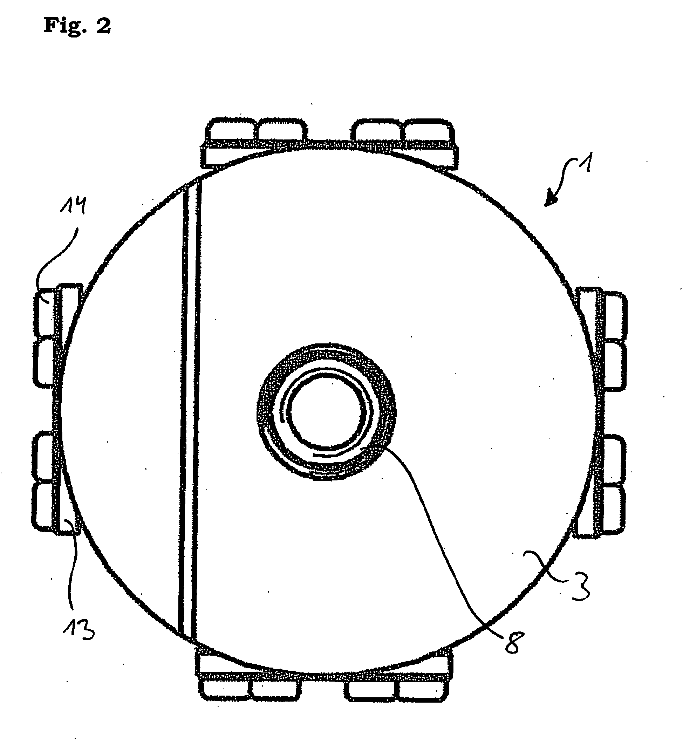

Fig. 2 zeigt eine Aufsicht eines zusammengesetzten erfindungsgemäßen Kreuzgelenkes 1 auf das Basisteil 6 mit dem Gewindeeinsatz 8.

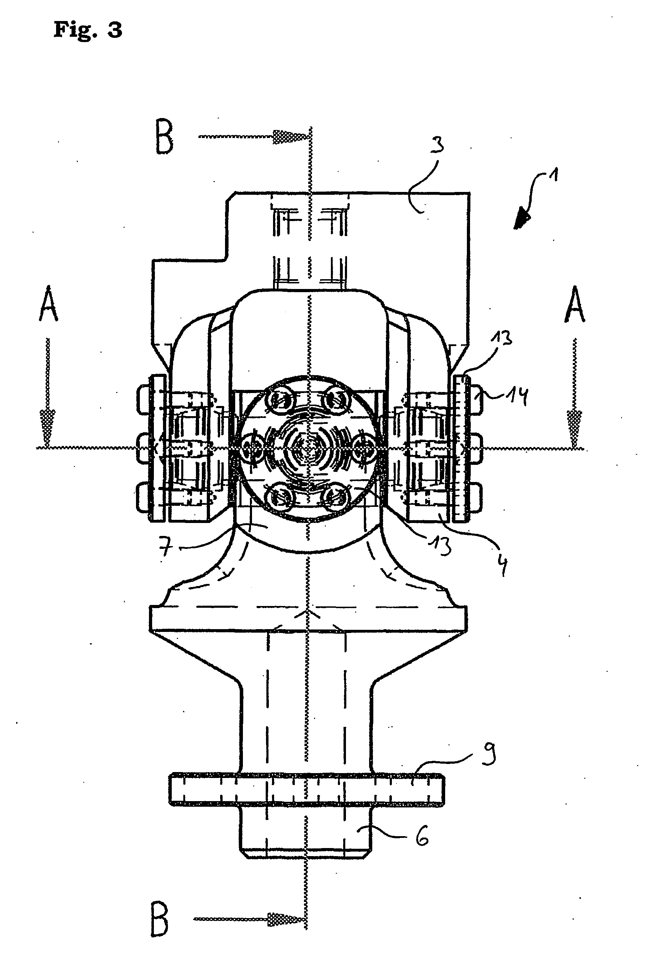

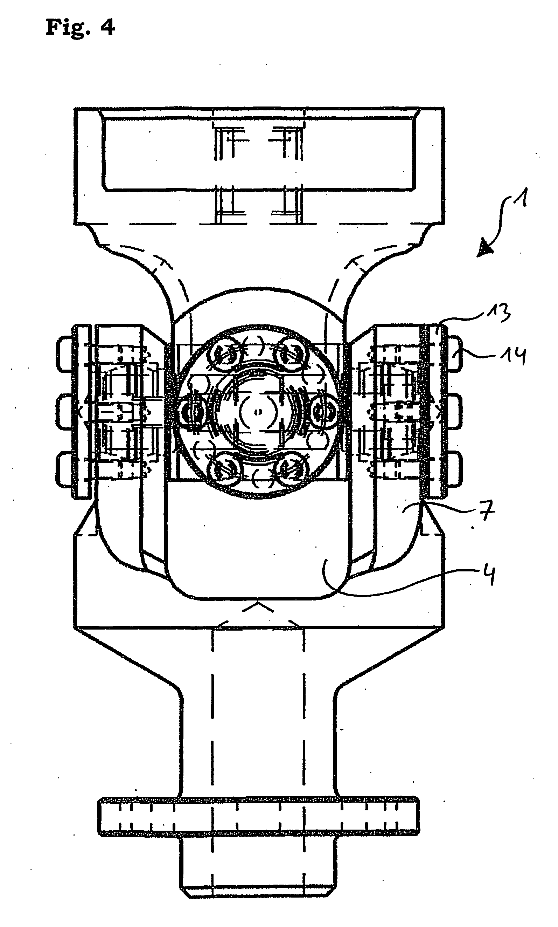

Fig. 3 und Fig. 4 zeigen jeweils eine Seitenansicht eines erfindungsgemäßen Kreuzgelenkes 1. Die Druckplatten 13 sind mittels Schrauben 14 an den Gabelelemente 4 und 7 befestigt.

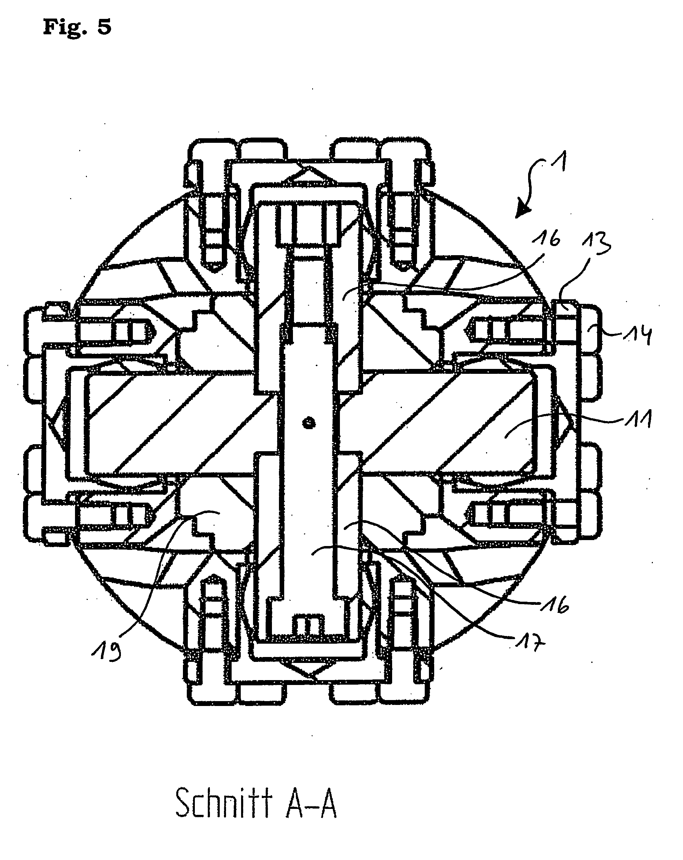

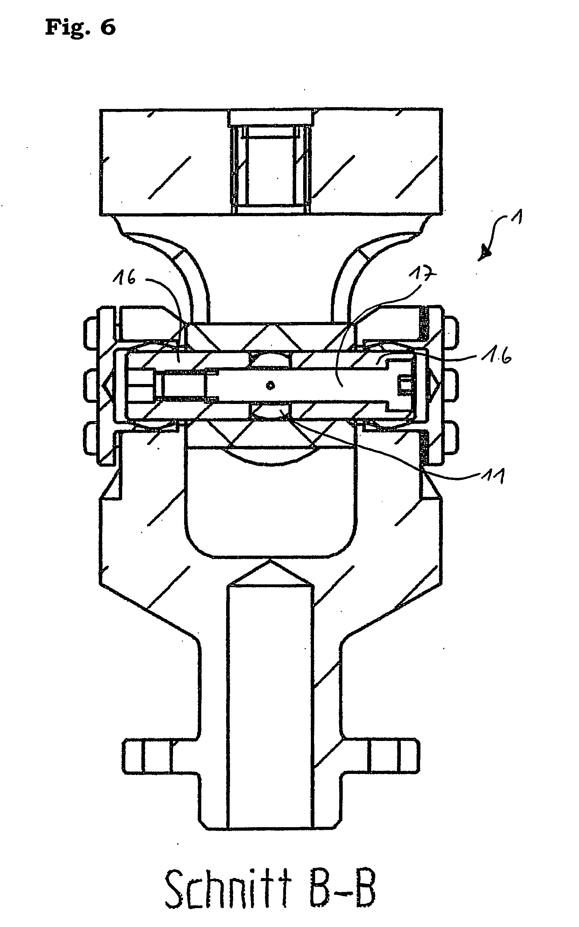

Fig. 5 zeigt eine Ansicht eines erfindungsgemäßen Kreuzgelenkes 1 gemäß dem Schnitt A-A aus Fig. 3 und Fig. 6 zeigt eine Ansicht eines erfindungsgemäßen Kreuzgelenkes 1 gemäß dem Schnitt B-B aus Fig. 3. Durch die Schraube 17 sind die Hülsen 16 an dem Bolzen 11 befestigt. An dem Kreuzungspunkt der beiden Gelenkachsen ist der Positionierungsblock 19 angeordnet.

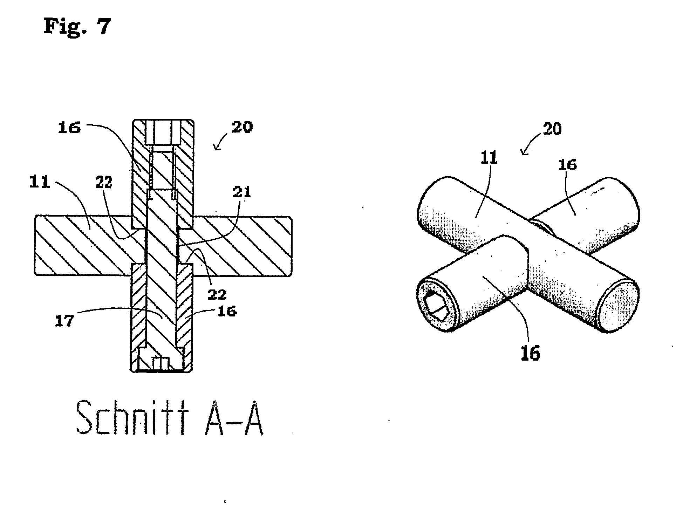

Fig. 7 eine perspektivische Detailansicht eines Kreuzbolzens 20 und eine Ansicht des Kreuzbolzens 20 gemäß dem Schnitt A-A aus Fig. 3. Der Kreuzbolzen 20 ist als das Herzstück des erfindungsgemäßen Kreuzgelenkes 1 zu bezeichnen. Hier werden sämtliche Kräfte übertragen. Idealerweise schneiden sich die Achsen des erfindungsgemäßen Kreuzgelenkes 1 exakt im Mittelpunkt. Bedingt durch die Fertigungstoleranzen ist das aber praktisch nicht möglich. Für gewöhnlich wird das Achsenkreuz bei einem Kreuzgelenk aus einem festen Körper unter Einsatz der dadurch notwendigen wie auch kostenintensiven Herstellungsverfahren erstellt. Dadurch, dass die exakte Überschneidung der Achsen im Zentrum nicht von den Geometrien der Einzelteile des Kreuzbolzens 20 bestimmt wird, können die Einzelteile mit relativ groben Toleranzen gefertigt werden. Der im erfindungsgemäßen Kreuzgelenk 1 verwendete, bevorzugt an allen Seiten zylindrische Kreuzbolzen 20 zeichnet sich im Besonderen durch die folgenden Verbesserungen aus:
1. Geteilter Aufbau, dadurch bedeutend größere Montageflexibilität,
2. Einzelteile mit geometrisch einfach zu fertigenden Flächen,
3. Große Materialvariabilität,
4. Große Beschichtungsvariabilität,
5. keine hohe Positioniergenauigkeit der Einzelachsen notwendig und
6. Verschleißteile einzeln auswechselbar.

Speziell bei den Einzelteilen des hier beschriebenen Kreuzgelenkbolzens 20, kommt der Beschichtung der Gleit-, Wälzlagerflächen eine besondere Bedeutung zu. Als existenziell für die Verschleißfestigkeit der Lagereinheit, ist hier der Einsatz entsprechender oxydischer, nitritischer oder dergleichen zu verwendender Beschichtungsverfahren zu nennen. Bei den Beschichtungen sind alle Kombinationen der PVD/CVD Beschichtungen bzw. Härteverfahren, sowie TIN, TIALN, CR/C, TICN, Hartchrom, usw. vorteilhaft.

Als idealer Werkstoff zur Herstellung der Kreuzbolzeneinzelteile hat sich Werkzeugstahl hoher Güte bewährt. Die Anlasstemperatur dieser Stähle liegt über der beim PVD-Beschichten eingebrachten Temperatur. Somit werden die Substrateigenschaften nicht oder nur unwesentlich beeinflusst. Aber auch der Einsatz vollkeramischer Werkstoffe, Kunststoffe oder anderer Materialien wäre denkbar.

Der in Fig. 7 dargestellte Kreuzbolzen 20 ist als durchgehender zylindrischer Körper gefertigt. In der Mitte befindet sich eine für die Schraube 17 (Achspassschraube) notwendige und entsprechend gefertigte Querbohrung 21. Die Austrittsbereiche der Querbohrung 21 weisen zur Plananlage der Hülsen 16 (Gelenkhülsen) entsprechend vertiefte Flächen 22 auf. Verschraubt werden die Hülsen 16 mittels der Schraube 17 (Normteil). Die Hülsen 16 werden in den Führungs- bzw. Überdeckungsbereichen des Passbolzens mit entsprechend engen Innentoleranzen gefertigt. Somit wird ein geringerer Biegemoment auf das Gewinde des Achspassbolzens übertragen.

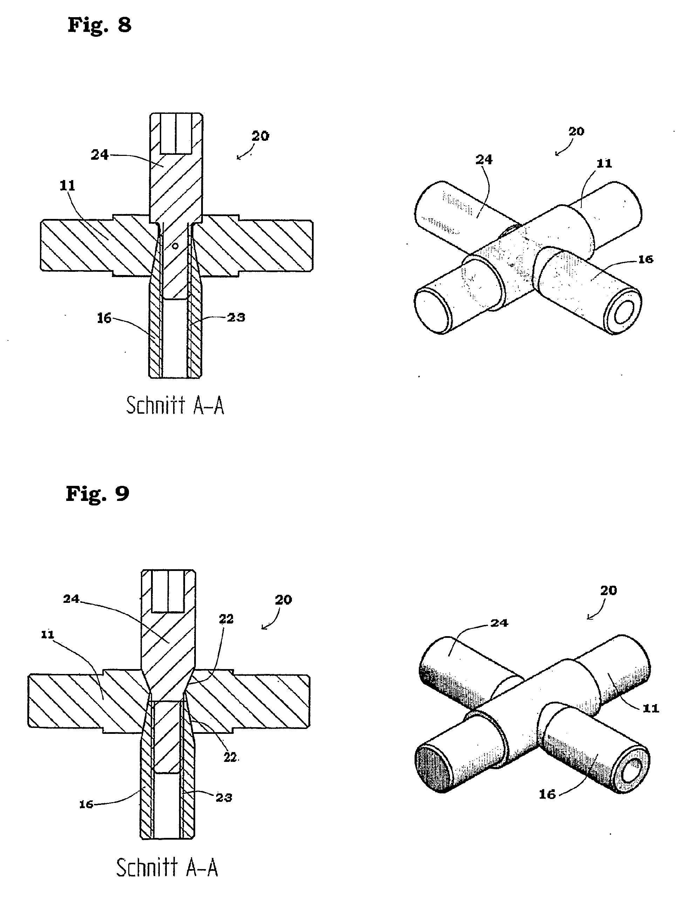

Fig. 8 zeigt eine perspektivische Detailansicht eines Kreuzbolzens 20 und eine Ansicht des Kreuzbolzens 20 gemäß dem Schnitt A-A aus Fig. 3 in einer abgeänderten Form. Hierbei erfolgt der Aufbau des zerlegbaren Kreuzbolzens 20 mit abgesetzten Bolzen 11 bzw. Hülsen. Bei dieser Lösung können die Lagerdurchmesser ohne die Grundsteifigkeit des Kreuzbolzens 20 entscheidend zu beeinflussen, variiert werden. Des Weiteren die Verschraubung des Kreuzbolzens 20 auch ohne Achspassschraube ausgeführt werden. Hierbei wird in die Hülse 16 ein Gewinde 23 eingebracht. In dieses Gewinde 23 wird der Bolzen 24 durch den Bolzen 11 geschraubt. Der Vorteil dieser Anordnung liegt darin, dass die Bolzenverbindung geometrisch auf die Achsenmitte und somit auf den erwünschten Schnittpunkt gezwungen wird.

Fig. 9 zeigt eine perspektivische Detailansicht eines Kreuzbolzens 20 und eine Ansicht des Kreuzbolzens 20 gemäß dem Schnitt A-A aus Fig. 3 in einer weiteren abgeänderten Form. Hierbei sind die Kontaktflächen (vertiefte Flächen 22) konisch ausgelegt. Dadurch werden beide Fügeteile in die bereits beschriebene Zwangslage gebracht.

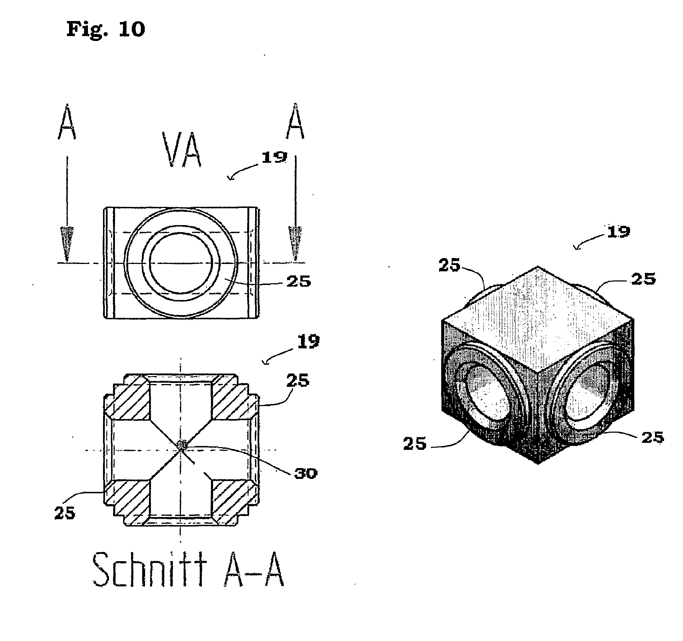

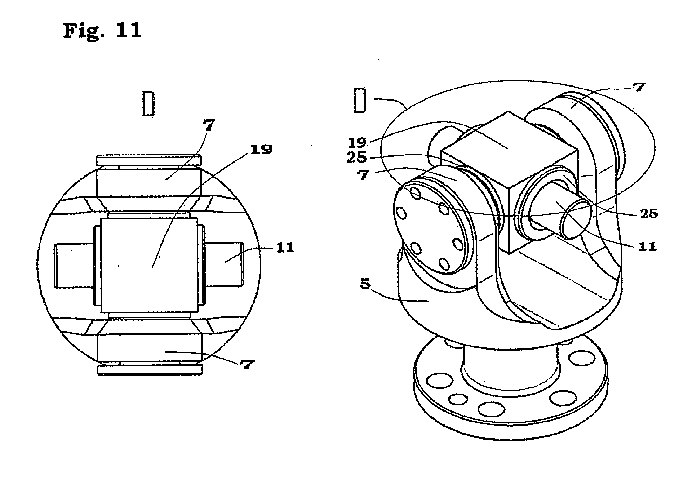

Fig. 10 zeigt eine perspektivische Ansicht eines Positionierblocks 19 und Schnittzeichnungen des Positionierblocks 19. Der Positionierblocks 19, dessen Material bevorzugt AL (Oberfläche Hartcoatiert, Eloxiert, odgl.), Kunststoff, Keramik, Stahl, odgl. ist, stellt das maßgebende Bauteil zwischen den beiden Gelenkgabeln 2 und 5 und des Kreuzbolzens 20 dar (Fig. 11). Der Positionierblock 19 bringt mittels seiner hochgenauen Kreuzbohrung 30 die Einzelteile des Kreuzbolzens 20 in die passgenaue Position. Des Weiteren bestimmt er über seine seitlichen Anlageflächen das Abstandsmaß der beiden Gelenkgabeln 2 und 5 zum Achsenkreuz. Die seitlichen Laufflächen (Gleitflächen 25) können direkt mit angefertigt werden oder in Form einer Gleitlagerbuchse, Tellerfeder oder als Axialwälzlager ausgelegt sein. Die im Folgenden beschriebenen Systeme können nach Anforderung kombiniert werden.

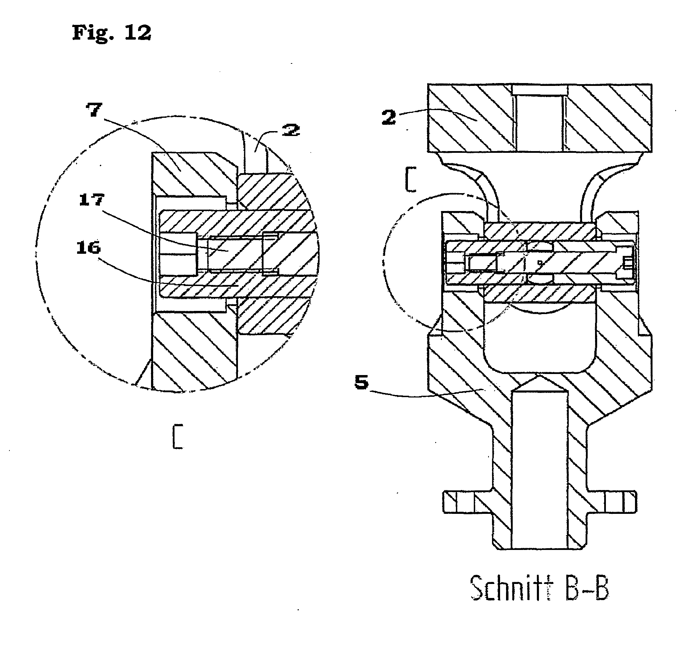

Fig. 12 zeigt eine Ansicht eines erfindungsgemäßen Kreuzgelenkes 1 gemäß dem Schnitt B-B aus Fig. 3 und eine Detailansicht einer ersten Variante der Einbausituation des Positionierblocks 19. Hierbei besteht der Positionierblock 19 bevorzugt aus hohen teflongraphithaltigen Kunststoffen. Die Anlageflächen an den Gelenkgabeln sind zur Verschleißfreiheit der Gabel hartcoatiert (Oberflächenbeschichtung speziell für hochfeste AL-Legierungen). Bevorzugt sind die seitlichen Gleitflächen aus dem Vollen gefertigt. Der Vorteil dieser Variante besteht in einer einfachen Montage, einer großflächigen Auflage und einer damit verbundenen geringeren Flächenpressung an Gelenkgabel 2 und 5 und einer exakten Positionierung der Gelenkgabeln 2 und 5 und des Kreuzbolzens 19.

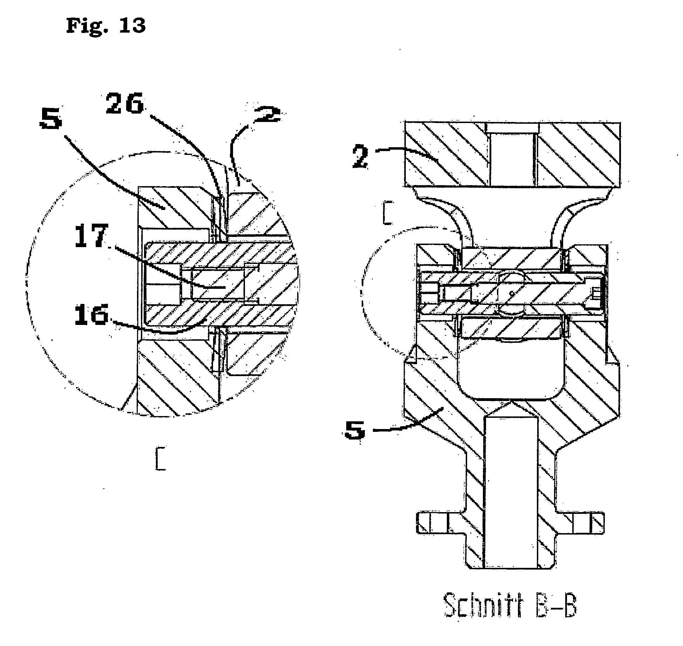

Fig. 13 zeigt eine Ansicht eines erfindungsgemäßen Kreuzgelenkes 1 gemäß dem Schnitt B-B aus Fig. 3 und eine Detailansicht einer zweiten Variante der Einbausituation des Positionierblocks 19. Hierbei wird die Möglichkeit genutzt, dass beim Positionierblock 19 die seitlichen Anlageflächen zu den Gelenkgabeln 2 und 5 als Tellerfeder 26 auszulegen. Dabei wird der Positionierblock 19 bevorzugt aus einer AL- Legierung hergestellt und entsprechend oberflächenvergütet. Die hier verbaute Tellerfeder 26 besteht bevorzugt aus einer teflonhaltigen Kunststoffverbindung. Der Einsatz anderer Werkstoffe wäre jedoch bei entsprechender Auslegung der Gleitlaufpartner möglich. Der Vorteil dieser Variante besteht in einem Ausgleich von Axialspiel bzw. Fertigungstoleranzen, einer axialen Schwingungsdämpfung, einer geringere Flächenpressung durch die Gleitlagerung, in einem kostengünstigen Verschleißteil, in einer gleichen Wärmeausdehnungskoeffizienz der Gelenkgabel-Positionierblock-Kombination und in einer einfachen Montage.

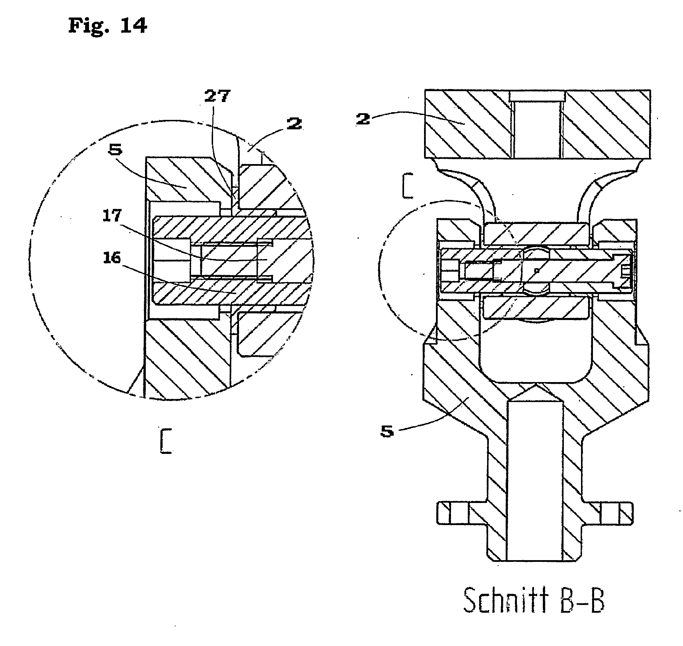

Fig. 14 zeigt eine Ansicht eines erfindungsgemäßen Kreuzgelenkes 1 gemäß dem Schnitt B-B aus Fig. 3 und eine Detailansicht einer dritten Variante der Einbausituation des Positionierblocks 19. Hierbei werden die Bohrungen im Positionierblock 19 so ausgelegt, dass eine zusätzliche Gleitlagerbuchse 27 aus Kunststoff, Metall, Schichtstoffen, Sintermaterialien oder sonstigen beschichteten Materialien eingepresst werden kann. Die Buchse (Gleitlagerbuchse 27) überträgt die Bewegung bzw. die Kräfte von den Gabeln 2 und 5 auf den Positionierblock 19 bzw. auf den Kreuzbolzen 20. Somit wirkt die Lagerbuchse (Gleitlagerbuchse 27) sowohl als Axiallager wie auch als Radiallager. Der Vorteil dieser Variante besteht in einem Ausgleich von Axialspiel bzw. Fertigungstoleranzen, einer axialen Schwingungsdämpfung, einer geringere Flächenpressung durch die Gleitlagerung, in einem kostengünstigen Verschleißteil, in einer gleichen Wärmeausdehnungskoeffizienz der Gelenkgabel-Positionierblock-Kombination und in einer einfachen Montage.

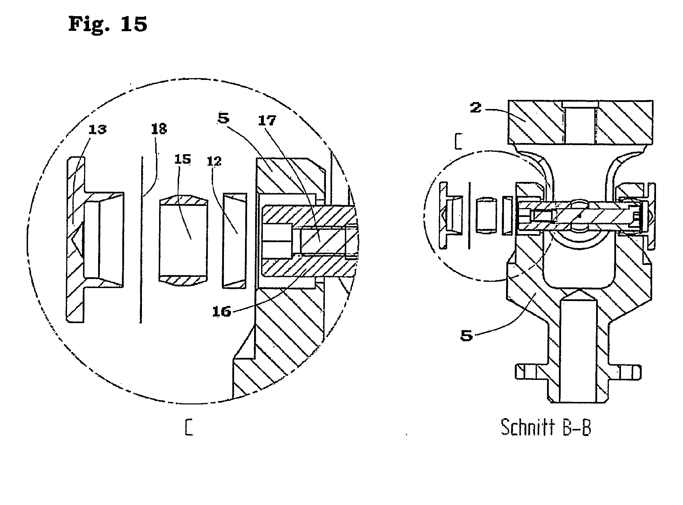

Fig. 15 zeigt eine Ansicht eines erfindungsgemäßen Kreuzgelenkes 1 gemäß dem Schnitt B-B aus Fig. 3 und eine Detailansicht einer Radiallagerung der Bolzen in den Gelenkaugen. Hierbei handelt es sich um eine spiel- sowie wartungsfreie und teilweise auch selbstnachstellende Gleitlagerung. Die Kombination mit herkömmlichen Wälzlagern, im Besonderen Nadellager kleiner Baugrößen, ist dabei weiterhin möglich.

Kernelemente der Radiallagerung stellen die Druckplatte 13, der Distanzring (Nivellierelement) 18, der Konusring 12, und der Lagerring (Ringfeder 15) dar.

Durch Anschrauben der Druckplatte 13 gegen die Gelenkgabel 2 und 5 wird der axiale Abstand des gesamten Lagerpakets verändert. Mit den Distanzringen 18 ist es möglich, die Lagervorspannung einzustellen bzw. auftretenden Verschleiß durch Nachstellen auszugleichen. Der Lagerring (Ringfeder 15) wird zwischen der Druckplatte 13 und dem in der Gelenkgabel 2 und 5 befindlichen Konusring 12 eingespannt. Durch die auf den Bauteilen befindlichen konisch angebrachten Flächen, wird der Innendruckmesser des Lagerrings soweit verjüngt, dass ein Lagerspiel ausgeschlossen werden kann.

Durch diesen Aufbau werden die folgenden Verbesserungen erzielt:
1. Spielfreiheit,
2. kleine Flächenpressung durch Gleitlagerung,
3. statisch sehr hohe Kräfte übertragbar,
4. dynamisch hohe Kräfte übertragbar,
5. Verschleißausgleich möglich,
6. geringe Reibung durch optimierte Materialpaarungen,
7. Schwingungsdämpfung,
8. hohe Positioniergenauigkeit über längeren Zeitraum,
9. geringe Massen durch Leichtbauwerkstoffe und
10. kostengünstige Verschleißteile.

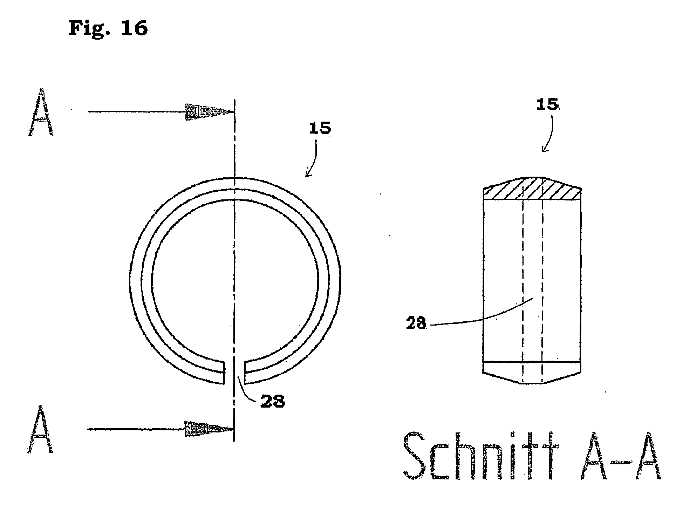

Fig. 16 zeigt eine Ausführungsvariante des Lagerrings (Ringfeder 15) in Schnittzeichnungen. Da die Nachstellung bei geschlossenem Lagering relativ gering ist und nur mit relativ elastischen Werkstoffen sicher funktioniert, besteht die Möglichkeit den Lagerring in geschlitzter Bauweise auszuführen. Durch den Schlitz 28 erhöht sich die Nachstellung erheblich, da dieser den Einsatz als selbstnachstellendes Lagerelement ermöglicht. Bevorzugt werden Materialien wie Teflon-grafithaltige Kunststoffe, Keramik, Stahl, beschichtete Werkstoffe eingesetzt.

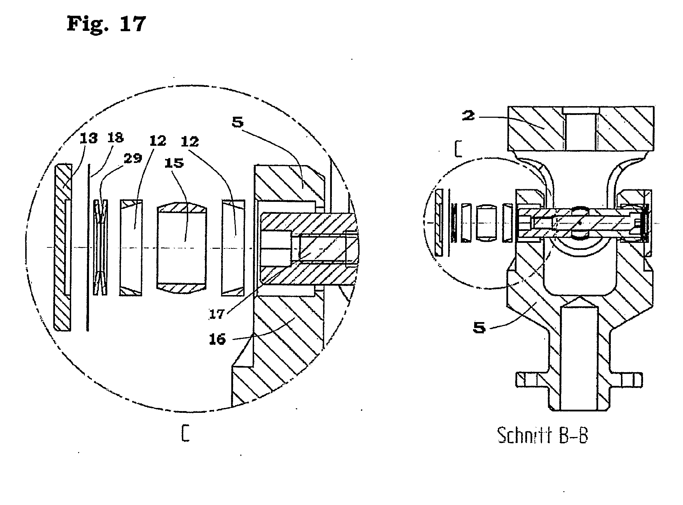

Fig. 17 zeigt eine Ansicht eines erfindungsgemäßen Kreuzgelenkes 1 gemäß dem Schnitt B-B aus Fig. 3 und eine Detailansicht einer abgewandelten Radiallagerung, die selbstnachstellend ist. Um die Spielfreiheit des erfindungsgemäßen Kreuzgelenkes 1 über einen längeren Zeitraum zu gewährleisten, ist die Lagereinheit mit entsprechenden Federelementen ausgestattet. Bei dieser Anordnung wird das Lagerspiel bzw. auftretender Verschleiß durch die zwischengeschalteten Federelemente ausgeglichen. Die Federelemente können als geschlitzte Stahltellerfeder 29 ausgeführt sein. Darüber hinaus können aber auch andere Federelemente bspw. Schraubenfedern, Elastomere oder Flüssigkeits-, Gasdrücke verwendet werden.

Die unterschiedlichen Varianten und Detaillösungen des erfindungsgemäßen Kreuzgelenkes 1 dienen einer spielfreien Lagerung für parallelkinematische Anwendungen. Dabei werden durch das erfindungsgemäße Kreuzgelenk 1 in vorteilhafter Weise folgende Anforderungen erfüllt:
1. Spielfreiheit,
2. Wartungsfreiheit,
3. Langlebigkeit unter industriellen Einsatzbedingungen,
4. Präzises Umsetzten der initiierten Bewegung,
5. Vermeidung des Stip-Slick-Effekts,
6. Minimale, bewegte Massen,
7. Geringe innere Reibung,
8. Ausgewogenes Steifigkeits-Dämpfungsverhalten,
9. Kostenorientierung und
10. Einfache Montage.

### Bezugszahlenliste:

- 1: Kreuzgelenk
- 2: Erste Gelenkgabel
- 3: Basisteil
- 4: Gabelelement
- 5: Zweite Gelenkgabel
- 6: Basisteil
- 7: Gabelelement
- 8: Gewindeeinsatz
- 9: Flansch
- 10: Bohrung
- 11: Bolzen
- 12: Lagerring
- 13: Druckplatte
- 14: Schraube
- 15: Ringfeder
- 16: Hülse
- 17: Schraube
- 18: Distanzring
- 19: Positionierblock
- 20: Kreuzbolzen
- 21: Querbohrung
- 22: Vertiefte Fläche
- 23: Gewinde
- 24: Bolzen
- 25: Gleitfläche
- 26: Tellerfeder
- 27: Gleitlagerbuchse
- 28: Schlitz
- 29: Stahltellerfeder
- 30: Kreuzbohrung

## Patentansprüche

1. Kreuzgelenk (1), bestehend aus einer ersten eine Gelenkachse aufweisenden Gelenkgabel (2) und einer zweiten eine Gelenkachse aufweisenden Gelenkgabel (5), wobei die Gelenkachsen durch Gleitlager gelagert sind und wobei die Gelenkgabeln (2, 5) aus jeweils einem Basisteil (3, 6) und jeweils zwei Gabelelementen (4, 7) gebildet werden, wobei jedes Gabelelement (4, 7) eine verschließbare Bohrung (10) aufweist, und sich die Gelenkachsen zwischen den Bohrungen (10) kreuzen, wobei
eine Lagervorspanneinheit eine spielfreie Bewegung der Gelenkgabel (2, 5) um deren Gelenkachse ermöglicht, wobei die Lagervorspanneinheit mindestens durch ein auf die Gelenkachse wirkendes Federelement gebildet wird und mindestens eine der Bohrungen des Gabelelementes (4, 7) durch eine auf das Federelement (15) wirkende Druckplatte (13) verschlossen ist, und **dadurch gekennzeichnet, daß** die Gelenkachsen durch einen Bolzen (11), der eine Querbohrung (21) aufweist, und zwei senkrecht zu diesem angeordneten Hülsen (16) oder durch einen Bolzen (11), der eine Querbohrung (21) aufweist, und eine senkrecht zu diesem angeordnete Hülse (16) und einem senkrecht zu diesem angeordneten Bolzen (24) gebildet werden.

2. Kreuzgelenk (1), nach Anspruch 1, **dadurch gekennzeichnet, dass** zwischen der Druckplatte (13) und dem Basisteil (3, 6) ein Distanzring (18) angeordnet ist.

3. Kreuzgelenk, nach Anspruch 1 oder 2, **dadurch gekennzeichnet, dass** das Federelement eine Ringfeder (15) ist.

4. Kreuzgelenk (1), nach einem der vorhergehenden Ansprüchen, **dadurch gekennzeichnet, dass** zwischen den Bohrungen (10) für die Positionierung der Gelenkachsen ein Positionierblock (19) angeordnet ist.

5. Kreuzgelenk (1), nach Anspruch 4, **dadurch gekennzeichnet, dass** die Gelenkachsen durch ein Gleitlager in dem Positionierblock (19) gelagert sind.

6. Kreuzgelenk (1), nach einem der vorhergehenden Ansprüchen, **dadurch gekennzeichnet, dass** die Gelenkachsen aneinander fixiert sind.

7. Kreuzgelenk (1), nach Anspruch 6, **dadurch gekennzeichnet, dass** die Fixierung durch eine Schraube (17) erfolgt, die durch die Hülsen (16) und eine Bohrung im Bolzen (11) steckbar ist.

8. Kreuzgelenk (1), nach einem der vorhergehenden Ansprüchen, **dadurch gekennzeichnet, dass** das Basisteil (3, 6) auf der den Gabelelementen (4, 7) abgewandten Seite mindestens ein Befestigungsmittel (8, 9) aufweist.

## Claims

1. A universal joint (1), consisting of a first joint fork (2) having a joint axis, and of a second joint fork (5) having a joint axis, wherein the joint axes are mounted by sliding bearings and wherein the joint forks (2, 5) are formed from respectively a base part (3, 6) and respectively two fork elements (4, 7), wherein each fork element (4, 7) has a closable bore (10), and the joint axes intersect between the bores (10), wherein a bearing pre-stressing unit makes possible a movement of the joint forks (2, 5) which is free of play about the joint axis thereof, wherein the bearing pre-stressing unit is formed at least by a spring element acting on the joint axis, and at least one of the bores of the fork element (4, 7) is closed by a pressure plate (13) acting on the spring element (15), and **characterized in that**
the joint axes are formed by a pin (11) which has a transverse bore (21), and two sleeves (16) arranged perpendicularly thereto, or by a pin (11) which has a transverse bore (21), and a sleeve (16) arranged perpendicularly thereto and a pin (24) arranged perpendicularly thereto.

2. The universal joint (1) according to Claim 1, **characterized in that** a spacer ring (18) is arranged between the pressure plate (13) and the base part (3, 6).

3. The universal joint according to Claim 1 or 2, **characterized in that** the spring element is an annular spring (15).

4. The universal joint (1) according to any of the preceding claims, **characterized in that** a positioning block (19) is arranged between the bores (10) for the positioning of the joint axes.

5. The universal joint (1) according to Claim 4, **characterized in that** the joint axes are mounted in the positioning block (19) by a sliding bearing.

6. The universal joint (1) according to any of the preceding claims, **characterized in that** the joint axes are fixed to each other.

7. The universal joint (1) according to Claim 6, **characterized in that** the fixing takes place by a screw (17) which is able to be inserted through the sleeves (16) and a bore in the pin (11).

8. The universal joint (1) according to any of the preceding claims, **characterized in that** the base part (3, 6) has at least one fastening means (8, 9) on the side facing away from the fork elements (4, 7).

## Revendications

1. Articulation en croix (1), constituée d'une première fourche d'articulation (2) comportant un axe d'articulation, et d'une deuxième fourche d'articulation (5) comportant un axe d'articulation, les axes d'articulation étant supportés par des paliers lisses et les fourches d'articulation (2, 5) étant formées chacune par une base (3, 6) et deux éléments de fourche (4, 7), chacun des éléments de fourche (4, 7) comportant un perçage apte à être fermé (10), et les axes d'articulation se croisant entre les perçages (10), une unité de précontrainte de palier permettant un mouvement sans jeu de la fourche d'articulation (2, 5) autour de son axe d'articulation, l'unité de précontrainte de palier étant formée par au moins un élément de ressort agissant sur l'axe d'articulation, et au moins l'un des perçages de l'élément de fourche (4, 7) étant refermé par une plaque de pression (13) agissant sur l'éléments de ressort (15),
**caractérisée en ce que**
les axes d'articulation sont formés par un tourillon (11) comportant un perçage transversal (21), et par deux douilles (16) disposées verticalement à celui-ci, ou bien par un tourillon (11) comportant un perçage transversal (21) et par une douille (16) disposée verticalement à celui-ci ainsi que par un tourillon (24) disposé verticalement à celui-ci.

2. Articulation en croix (1) selon la revendication 1, **caractérisée en ce qu'**une entretoise (18) est installée entre la plaque de pression (13) et la base (3, 6).

3. Articulation en croix selon la revendication 1 ou 2, **caractérisée en ce que** l'élément de ressort est un ressort-bague (15).

4. Articulation en croix (1) selon l'une des revendications précédentes, **caractérisée en ce qu'**un bloc de positionnement (19) est installé entre les perçages (10), pour le positionnement des axes d'articulation.

5. Articulation en croix (1) selon la revendication 4, **caractérisée en ce que** les axes d'articulation sont supportés par un palier lisse dans le bloc de positionnement (19).

6. Articulation en croix (1) selon l'une des revendications précédentes, **caractérisée en ce que** les axes d'articulation sont fixées l'un à l'autre.

7. Articulation en croix (1) selon la revendication 6, **caractérisée en ce que** la fixation est effectuée au moyen d'une vis .(17) pouvant être enfoncée à travers les douilles (16) et à travers un perçage dans le tourillon (11).

8. Articulation en croix (1) selon l'une des revendications précédentes, **caractérisée en ce que** la base (3, 6) comporte au moins un moyen de fixation (8, 9) du côté détourné des éléments de fourche (4, 7).
